# EUROPÄISCHE PATENTSCHRIFT

(11) **EP 1 175 755 B1**
(45) Veröffentlichungstag und Bekanntmachung des Hinweises auf die Patenterteilung: **17.11.2004**
(21) Anmeldenummer: 00934853.3
(22) Anmeldetag: 03.04.2000
(51) Int. Cl.: H04L 12/28

(54) **DATENAUSTAUSCHSYSTEM MIT EINEM MOBILTEIL ZUR ANSTEUERUNG VON VERBRAUCHERN**
DATA EXCHANGE SYSTEM WITH A MOBILE UNIT FOR CONTROLLING CONSUMERS
SYSTEME D'ECHANGE DE DONNEES COMPORTANT UN ELEMENT MOBILE POUR COMMANDER DES CONSOMMATEURS

(30) Priorität: 30.04.1999 DE 19919921
(43) Veröffentlichungstag der Anmeldung: 30.01.2002
(73) Patentinhaber: SIEMENS AKTIENGESELLSCHAFT, 80333 München (DE)
(72) Erfinder: BURCHARD, Bernd, D-85521 Ottobrunn (DE); PRANGE, Stefan, D-81476 München (DE)
(86) Internationale Anmeldenummer: PCT/DE2000/001011
(87) Internationale Veröffentlichungsnummer: WO 2000/067429

(56) Entgegenhaltungen:
- EP-A- 0 838 768
- WO-A-99/09780
- DESBONNET J ET AL: "SYSTEM ARCHITECTURE AND IMPLEMENTATION OF A CEBUS/INTERNET GATEWAY" IEEE TRANSACTIONS ON CONSUMER ELECTRONICS,US,IEEE INC. NEW YORK, Bd. 43, Nr. 4, 1. November 1997 (1997-11-01), Seiten 1057-1062, XP000768558 ISSN: 0098-3063
- GOLDBERG L: "INFORMATION APPLIANCES: FROM WEB PHONES TO SMART REFRIGERATORS" ELECTRONIC DESIGN,US,PENTON PUBLISHING, CLEVELAND, OH, Bd. 46, Nr. 7, 23. März 1998 (1998-03-23), Seiten 69-70,74,76,78,80,82,84, XP000780456 ISSN: 0013-4872

## Beschreibung

Die vorliegende Erfindung betrifft ein Datenaustauschsystem, insbesondere ein Mobiltelefonsystem bzw. Heim-Mobiltelefonsystem, nach dem Oberbegriff des Anspruches 1 zur Ansteuerung von Geräten oder Verbrauchern.

In der Veröffentlichungsschrift WO 99/09780 wird ein System zur Steuerung einer Vielzahl von elektrischen Verbrauchern beschrieben. Diese Verbraucher sind über zwischengeschaltete Aktuatoren mittels einer IP-Adresse zugänglich. Aus der Veröffentlichungsschrift EP 0 838 768 A2 ist weiterhin die Verwendung einer Schnittstelle zum Internet bekannt, wodurch Verbraucher gesteuert werden können.

Das Mobiltelefon (Handy) befindet sich in der Entwicklung zu einem Massenprodukt. Es ist absehbar, daß das Mobiltelefon in Zukunft zu einem Standardgerät des täglichen Lebens wird.

Zur Zeit befindet sich das sogenannte CTS (Cellular Telephony System) in der Standardisierungsphase. Das CTS erlaubt die Benutzung eines Mobiltelefons als schnurloses Telefon im Heimbereich an einer Heim-Basisstation (Home Base Station). Die Heim-Basisstation dient als Schnittstelle zwischen dem Mobiltelefon und dem Festnetz und ermöglicht das Führen von Gesprächen von dem Mobiltelefon aus über das Festnetz.

Des weiteren wird derzeit diskutiert, Mobiltelefone auch als Fernbedienung für den Heimbereich zu nutzen. Augenblicklich wird daran gedacht, in Mobiltelefone eine Infrarot-Schnittstelle zu integrieren, so daß verschiedene Geräte im Heimbereich mit Hilfe eines Mobiltelefons über Infrarot-Steuersignale angesteuert werden können. In diesem Fall können die Mobiltelefone insbesondere als lernfähige Fernbedienung genutzt werden. Die Ausstattung von Mobiltelefonen mit einer Infrarot-Schnittstelle ist jedoch mit den Nachteilen verbunden, daß hierzu ein zusätzlicher Hardwareaufwand, eine zusätzliche Abstrahlleitung für die Infrarot-Leuchtdiode und ein direkter Sichtkontakt zwischen dem entsprechenden Mobiltelefon und den fernzusteuernden Geräten erforderlich ist.

Darüber hinaus sind bereits Anwendungen bekannt, bei denen im Heimbereich Mobiltelefone zur Ansteuerung von Verbrauchern eingesetzt werden. So ist beispielsweise ein auf Basis eines Heim-Mobilfunksystems implementiertes Datenaustauschsystem bekannt, bei dem mit Hilfe eines gemäß dem sogenannten DECT-Standard (Digital European Cordless Telephone) betriebenes Mobiltelefon zur Ansteuerung eines Fernsehgeräts verwendet wird, welches zugleich die Basisstation des Mobilfuksystems enthält.

Der vorliegenden Erfindung liegt die Aufgabe zugrunde, eine enfache Möglichkeit zur Ansteuerung von Verbrauchern über ein mobiles Datenaustauschgerät, insbesondere über ein Mobiltelefon, bereitzustellen.

Diese Aufgabe wird gemäß der vorliegenden Erfindung durch ein Datenaustauschsystem mit den Merkmalen des Anspruches 1 gelöst, welches ein Mobilteil, insbesondere ein Mobiltelefon, umfaßt. Die Unteransprüche definieren vorteilhafte und bevorzugte Ausführungsformen der Erfindung.

Die vorliegende Erfindung geht von einem eingangs beschriebenen Datenaustauschsystem aus, bei dem ein Mobilteil zur Ansteuerung eines Verbrauchers verwendet wird. Erfindungsgemäß werden die Steuerbefehle von dem Mobilteil über eine Internet-Schnittstelle an eine Steuereinrichtung übertragen. Das Datenaustauschsystem kann insbesondere in Form eines Heim-Mobilfunksystems ausgestaltet werden, so daß als Mobilteil ein Mobiltelefon mit Internet-Schnittstelle verwendet wird.

Da in naher Zukunft ohnehin geplant ist, High-End-Telefone mit einer Internet-Schnittstelle auszustatten, ist in einem derartigen Mobiltelefon für die Fernsteuerung der Verbraucher im wesentlichen keine zusätzliche Hardware erforderlich. Die Erfindung besitzt insbesondere den Vorteil, daß Geräte verschiedener Hersteller aufgrund der standardisierten Internet-Datenübertragung miteinander kommunizieren können.

Bei Verwendung eines Mobiltelefons als Mobilteil kann dieses an einer Heim-Basisstation als schnurloses Telefon betrieben werden. Mit dieser Heim-Basisstation werden erfindungsgemäß verschiedene fernzusteuernde Verbraucher gekoppelt, so daß über die Heim-Basisstation eine Fernsteuerung dieser Verbraucher über eine Datenverbindung beliebiger Art möglich ist.

Da die Heim-Basisstation in der Regel standardmäßig lediglich als Kommunikationsschnittstelle zwischen dem Mobiltelefon und einem Kommunikationsnetz ausgestaltet ist, ist zudem eine Steuerung erforderlich, welche einerseits über die Internet-Schnittstelle des Mobiltelefons von dem Mobiltelefon aus angesteuert wird und andererseits entsprechend die Steuerbefehle über die Datenverbindung an die einzelnen Verbraucher oder Geräte weiterleitet. Die Steuerung übernimmt somit die Funktion eines Heim-Servers (Home Server).

Die Heim-Basisstation kann beispielsweise auf dem GSM-Standard (Global System For Mobile Communication) oder UMTS-Standard (Universal Mobile Telecommunication System) und dem CTS-Standard beruhen.

Die Ansteuerung von Verbrauchern über ein Mobiltelefon besitzt zudem den Vorteil, daß für Mobiltelefone ohnehin ein System zur Identifizierung und Authentifizierung des Benutzers vorhanden ist, so daß dieses System auch zur Zugriffsbeschränkung für verschiedene Verbaucher oder deren Funktionen eingesetzt werden kann.

Die vorliegende Erfindung wird nachfolgend unter Bezugnahme auf die Zeichnung anhand eines bevorzugten Ausführungsbeispiels erläutert, wobei davon ausgegangen wird, daß das erfindungsgemäße Datenaustauschsystem in Form eines Heim-Mobilfunksystems ausgestaltet ist. Es wird jedoch darauf hingewiesen, daß die Erfindung auch auf andere Datenaustauschsysteme angewendet werden kann, bei denen an sich beliebige Mobilteile zur Ansteuerung von Verbrauchern zum Einsatz kommen.
Fig. 1 zeigt ein schematisches Blockschaltbild eines bevorzugten Ausführungsbeispiels der Erfindung zur Erläuterung des der Erfindung zugrundeliegenden Prinzips,
Fig. 2 zeigt eine Darstellung zur Erläuterung einer hierarchischen Menüstruktur, welche bei dem in Fig. 1 gezeigten System zur Steuerung verschiedener Verbraucher eingesetzt werden kann, und
Fig. 3 zeigt eine Abwandlung des in Fig. 1 dargestellten Systemaufbaus.

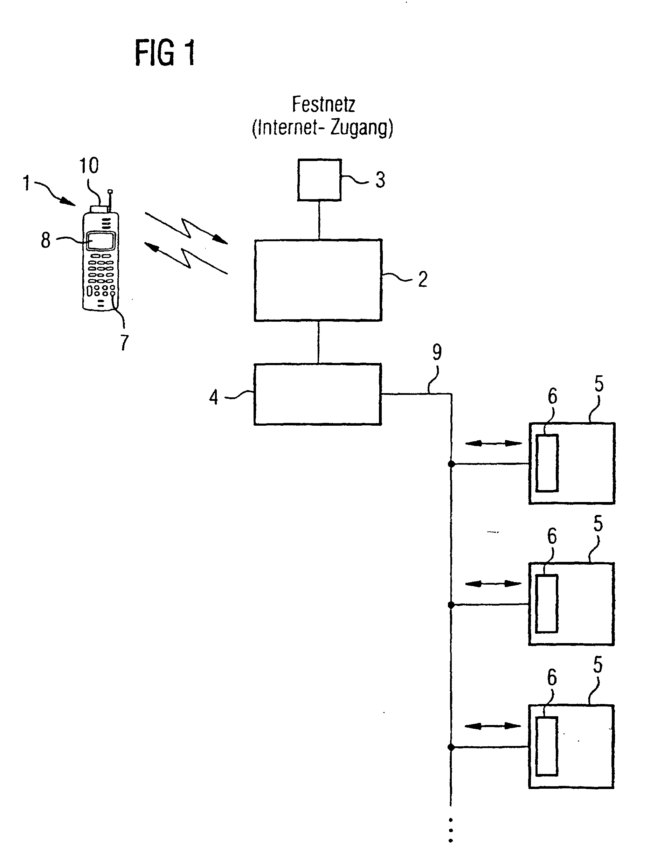

In Fig. 1 ist schematisch ein Heim-Mobiltelefonsystem gemäß der vorliegenden Erfindung dargestellt. Diese Heim-Mobiltelefonsystem umfaßt ein Mobiltelefon 1, eine Heim-Basisstation 2, welche über einen Anschluß oder eine Schnittstelle 3 mit einem Kommunikationsnetz verbunden ist, und einen mit der Heim-Basisstation 2 verbundenen Heim-Server 4. Bei dem Kommunikationsnetz kann es sich insbesondere um ein Telefon-Festnetz, ein Satelliten-Kommunikationsnetz, ein Funknetz oder bei Anwendung der sogenannten Power-Line-Technik auch um ein Stromnetz handeln.

Das Heim-Mobiltelefonsystem ist gemäß dem CTS-Standard derart ausgelegt, daß mit Hilfe der Basis-Heimstation 2 eine Kommunikationsverbindeung zwischen dem Mobiltelefon 1 und dem Kommunikationsnetz aufgebaut werden kann. Die Heim-Basisstation 2 dient somit als Kommunikationssschnittstelle zwischen dem Mobiltelefon 1 und dem Kommunikationsnetz und ermöglich die Verwendung des Mobiltelefons 1 als schnurloses Telefon im Heimbereich.

Der Heim-Server 4 dient als Steuereinrichtung, um von dem Mobiltelefon 1 übertragene Steuerbefehle in eine entsprechende Ansteuerung von verschiedenen Verbrauchern 5 umzusetzen. Zu diesem Zweck sind die Verbraucher 5 über eine Datenübertragungsleitung oder -strecke 9 mit dem Heim-Server 4 verbunden. Dabei kann es sich sowohl um eine verdrahtete Datenübertragung als auch um eine drahtlose Datenübertragung, z.B. eine Infrarotsignalübertragung, handeln.

Es ist bekannt, daß prinzipiell über das Internet (World Wide Web, WWW) Steuerbefehle abgesetzt werden können. Die derzeitigen Internet- bzw. Java-Entwicklungen zielen darauf ab, Geräte über das Internet zu venetzen und mit Hilfe von über das Internet übertragenen Steuerbefehlen fernzusteuern. Es kann davon ausgegangen werden, daß in naher Zukunft alle High-End-Telefongeräte eine Internet-Schnittstelle besitzen, um auf das Internet zugreifen zu können.

Bei dem in Fig. 1 gezeigten Ausführungsbeispiel ist daher auch das Mobiltelefon 1 mit einer Internet-Schnittstelle ausgerüstet, so daß von dem Mobiltelefon die Steuerbefehle zur Ansteuerung der verschiedenen Verbraucher in einem Internet-kompatiblen Format übertragen werden. Hierzu kann insbesondere der sogenannte WAP-Standard (Wireless Application Protocol) zum Einsatz kommen. Entsprechend ist der an die Heim-Basisstation 2 angeschlossene Heim-Server 4 mit einer Funktion zur Auswertung derartiger Internet-Steuerbefehle ausgerüstet, um diese Internet-Steuerbefehle in normale ananloge oder digitale Steuerbefehle zur Ansteuerung der verschiedenen Verbraucher umzusetzen. Über die Heim-Basisstation 2 ist ein normaler Internet-Zugang über den Telefon-Festnetzanschluß 3 möglich.

Bei den an die Datenübertragungsstrecke 9 angeschlossenen Verbrauchern 5 kann es sich im Prinzip um beliebige Geräte des Heim- oder Bürobereichs etc. handeln. So ist beispielsweise mit Hilfe des Mobiltelefons 1 die Fernsteuerung von Fernsehgeräten, Personal Computern, HiFi-Geräten, Videorecordern, Klimaanlagen oder Heizungsgeräten etc. denkbar.

Vorzugsweise erfolgt die Ansteuerung der einzelnen Verbraucher über die Datenübertragungsstrecke 9 in digitaler Form, da eine digitale Signalübertragung gegenüber einer analogen Signalübertragung eine erhöhte Übertragungssicherheit aufweist. Die Ansteuerung der einzelnen Verbraucher 5 durch den Heim-Server 4 kann somit in Form von digitalen Steuerwörtern erfolgen, wobei die Steuerwörter insbesondere in Abhängigkeit von den über die Tastatur 7 des Mobiltelefons 1 eingegebenen Steuerbefehlen geräte- oder verbraucherspezifische Adressen enthalten, um die gewünschten Verbraucher 5 ansprechen zu können. Jeder Verbaucher 5 ist in diesem Fall mit einer entsprechenden digitalen Datenschnittstelle ausgestattet, welche die an der Datenübertragungsstrecke 9 anliegenden Steuerwörter auf das Auftreten der eigenen Adresse hin überwacht und die Steuerbefehle bei eigener Adressierung entsprechend umsetzt.

Die Datenübertragungsstrecke 9 ist vorzugsweise bidirektional ausgestaltet, so daß die unterschiedlichen Verbraucher 5 nicht nur angesteuert, sondern auch überwacht werden können, d.h. es können von dem Mobiltelefon 1 aus auch Zustandsinformationen über die einzelnen Verbraucher 5 abgefragt werden. So kann beispielsweise abgefragt werden, ob ein bestimmtes Fernsehgerät eingeschaltet ist oder nicht. Die Übertragung von Rückmeldungen von der Heim-Basisstation 2 zu dem Mobiltelefon 1 erfolgt vorzugsweise ebenfalls über die Internet-Schnittstelle.

Die normale Kommunikation zwischen der Heim-Basisstation 2 und dem Mobiltelefon 1 kann grundsätzlich nach jedem beliebigen Mobilfunkstandard, wie z.B. GSM, DECT (Digital European Cordless Telephone) oder Bluetooth, oder auch per Infrarotübertragung erfolgen. Ebenso ist der Einsatz von Dual-Mode-Geräten (z.B. DECT/GSM) denkbar. Die Übertragung der Steuerbefehle von dem Mobiltelefon an die Heim-Basisstation 2 bzw. den daran angeschlossenen Heim-Server 4 kann darüber hinaus auch in einem anderen Frequenzband und mit kürzerer Reichweite als bei der normalen Gesprächsdatenübermittlung erfolgen.

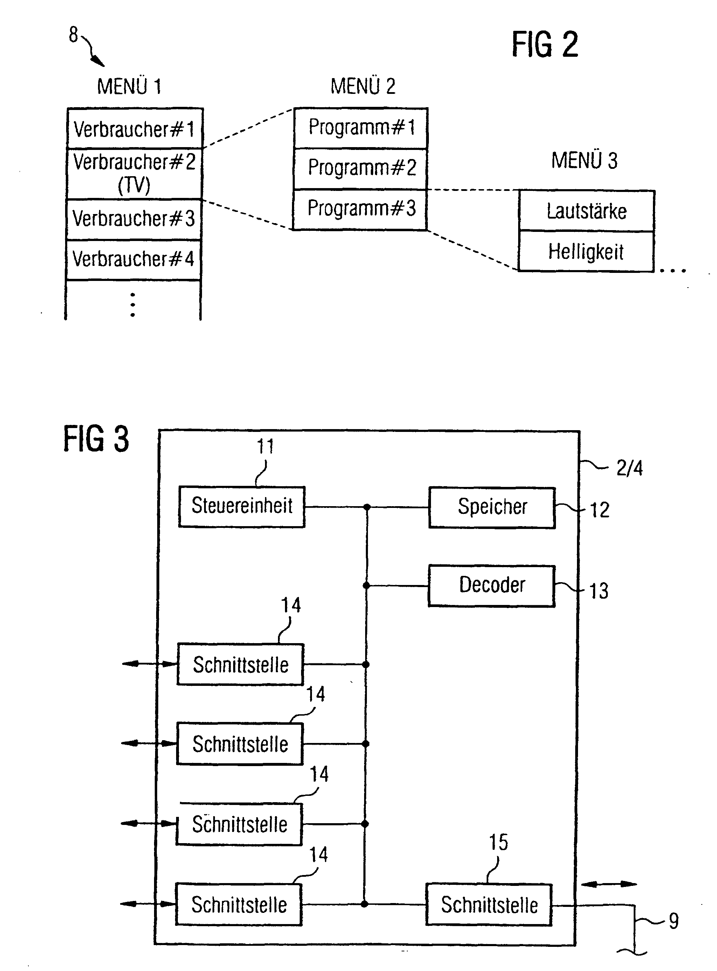

Die Ansteuerung der unterschiedlichen Verbraucher 5 kann von dem Mobiltelefon 1 aus vorteilhafterweise über eine hierarchische Menüstruktur erfolgen, wie sie beispielhaft in Fig. 2 dargestellt ist. Diese Menüstruktur kann auf dem Mobiltelefon 1 implementiert sein oder dem Mobiltelefon 1 von dem Heim-Server 4 angeboten werden. Nach Anwahl des Steuermenüs durch den Benutzer wird beispielsweise auf einer Anzeigeneinheit 8 (Display) des Mobiltelefons 1 das in Fig. 2 gezeigte erste Menü dargestellt. Mit Hilfe dieses Menüs kann der Benutzer vorzugsweise über die Tastatur 7 oder ein anderes Engabemedium eine Vorauswahl bezüglich des anzusteuernden Geräts oder Verbrauchers 5 treffen. Wurde als anzusteuerndes Gerät ein Fernsehgerät (TV) ausgewählt, wird auf der Anzeigeneinheit 8 beispielsweise das in Fig. 2 gezeigte zweite Menü dargestellt, über das das gewünschte Fernsehprogramm ausgewählt werden kann. Nach Auswahl eines Fernsehprogramms kann ein weiteres Menü dargestellt werden, mit dem beispielsweise wie in Fig. 2 gezeigt die Lautstärke oder Helligkeit eingestellt werden kann, usw..

Ein besonderer Vorteil bei der Fernsteuerung von Verbrauchern 5 mit Hilfe eines Mobiltelefons 1 besteht darin, daß für Mobiltelefone ohnehin ein System zur Identifizierung und Authentifizierung des Benutzers vorgesehehen ist. So können GSM-Mobiltelefone 1 nur mit sogenannten SIM-Karten 10 (Subscriber Identification Module) betrieben werden, welche in das Mobiltelefon 1 gesteckt werden und Identifizierungsinformationen über den jeweiligen Benutzer enthalten, die anschließend überprüft werden, um das Mobiltelefon 1 nur für den authorisierten Benutzer freizugeben. Die Authentifizierung des Benutzers wird in den Mobiltelefonen 1 immer zuverlässiger. Derzeit wird beispielsweise auch eine Fingerabdruckerkennung diskutiert. Darüber hinaus ist auch eine Identifikation durch Spracherkennung möglich.

Die oben erwähnten Identifizierungs- und Authentifizierungsmöglichkeiten von Mobiltelefonen 1 können vorteilhafterweise im Rahmen der vorliegenden Erfindung dazu verwendet werden, für den jeweiligen Benutzer lediglich bestimmte Verbraucher oder Geräte 5 bzw. entsprechende Funktionen der Verbraucher selektiv freizuschalten. Bei Anwendung der vorliegenden Erfindung im Bürobereich kann somit beispielsweise nach Identifizierung des Benutzers festgestellt werden, ob dieser bei Ansteuerung eines Personal Computers überhaupt zum Einschalten desselben berechtigt ist. Falls nicht, wird der Zugriff veweigert. Die Überprüfung der Zugriffsberechtigung kann dabei sowohl in dem Mobiltelefon 1 als auch in der Heim-Basisstation 2 bzw. dem Heim-Server 4 erfolgen. Ebenso können mit Hilfe der --Identifizierungsmöglichkeiten des Mobiltelefons 1 lediglich bestimmte Funktionen des jeweils angesteuerten Geräts 5 vor unberechtigten Zugriff geschützt werden. So können z.B. auf diese Weise bestimmte Fernsehprogramme benutzerspezifisch freigegeben oder (z.B. für Kinder) gesperrt werden.

Aufgrund der steigenden Rechenleistung der verfügbaren Rechnerkomponenten und der zunehmenden Integration können verschiedene Systemkomponenten in einem Gerät funktional vereinigt sein. Insbesondere ist es möglich, daß der Heim-Server 4 und die Heim-Basisstation 2 eine Einheit bilden, wie es in Fig. 3 angedeutet ist.

Eine derartige Einheit kann intern eine oder mehrere Steuereinheiten (CPUs) 11, einen oder mehrere Speicher 12 zum Speichern von Software und/oder Daten, Hilfsaggregate wie z.B. MPEG-Decoder (13) und verschiedene Schnittstellen 14, 15 zur Verbindung mit anderen Geräten aufweisen. Diese Schnittstellen können beispielsweise drahtgestützt oder drahtlos sein oder auch die sogenannte Power-Line-Technik unterstützen. Auch die Verwendung von dielektrischen Leitern, wie beispielsweise von Glasfasern, ist denkbar. Die Schnittstelle 15 dient zur Ankopplung an die Datenübertragungsstrecke 9.

Die Funktionalität einer derartigen Kombinationseinheit kann beispielsweise die Funktionalität eines Fernsehgeräts umfassen. Die Kombinationseinheit empfängt in diesem Fall über eine der Schnittstellen 14 (z.B. über einen Fernsehkabelanschluß) ein Fernsehprogramm und wandelt diese Daten mit Hilfe des MPEG-Decoders 13 in einen Bilddatenstrom um. Einer der angesteuerten Verbraucher 5 kann als digitaler Monitor ausgestaltet sein, der die Bilddaten von der Kombinationseinheit über die als IEEE1394-Bus ausgestaltete Datenübertragungsstrecke 9 empfängt.

Parallel zu diesem Fernsehbetrieb laufen auf der oder den Steuereinheiten 11 Prozesse, welche eine drahtlose Kommunikation zwischen der Kombinationseinheit und dem in Fig. 1 gezeigten Mobilteil 1 sicherstellen. Das Mobilteil 1 kann als weitere Ein- und Ausgabeeinheit für die Prozesse der Kombinationseinheit dienen. Die über das Mobilteil 1 eingegebenen Daten können über eine der angeschlossenen Schnittstellen 14, 15 der Kombinationseinheit zu anderen datenverarbeitenden Geräten oder Verbrauchern 5 übertragen werden.

## Patentansprüche

1. Datenaustauschsystem,
mit einem Mobilteil (1), und
mit einer Steuereinrichtung (2, 4), welche derart ausgestaltet ist, daß sie von dem Mobilteil (1) Steuerbefehle zur Ansteuerung mindestens eines Verbrauchers (5) empfängt, in entsprechende Steuersignale umsetzt und diese über eine Datenübertragungsstrecke (9) an den anzusteuernden Verbraucher (5) überträgt,
**dadurch gekennzeichnet,**
**daß** das Mobilteil (1) eine Internet-Schnittstelle zur Übertragung der Steuerbefehle an die Steuereinrichtung (2, 4) aufweist,
**daß** die Steuereinrichtung (2, 4) derart ausgestaltet ist, daß sie über die Internet-Schnittstelle von dem Mobilteil (1) übertragene Steuerbefehle auswerten und in eine entsprechende Ansteuerung der an die Datenübertragungsstrecke (9) angeschlossenen Verbraucher (5) umsetzen kann und
**daß** das Mobilteil (1) Identifizierungsmittel (10) zur Identifizierung des Benutzers des Mobilteils (1) aufweist, sowie daß das Mobilteil (1) und/oder die Steuereinrichtung (2, 4) derart ausgestaltet sind, daß die von den Identifizierungsmitteln (10) gelieferten Identifizierungsinformationen zur Freischaltung eines Zugriffs der an die Datenübertragungsstrecke (9) angeschlossenen Verbraucher (5) und/oder einzelner Funktionen davon ausgewertet werden.

2. Datenaustauschsystem nach Anspruch 1,
**dadurch gekennzeichnet,**
**daß** das Mobilteil (1) ein Mobiltelefon ist.

3. Datenaustauschsystem nach Anspruch 1 oder 2,
**dadurch gekennzeichnet,**
**daß** die Steuereinrichtung eine Schnittstelleneinrichtung (2) als Kommunikationsschnittstelle zwischen dem Mobilteil (1) und einem Kommunikationsnetz (3) umfaßt.

4. Datenaustauschsystem nach Anspruch 3,
**dadurch gekennzeichnet,**
**daß** die Ansteuerung der Steuereinrichtung (2, 4) durch das Mobilteil (1) in einem anderen Frequenzbereich als bei der Übertragung von Kommunikationsinformationen zwischen dem Mobilteil (1) und der Schnittstelleneinrichtung (2) erfolgt.

5. Datenaustauschsystem nach einem der vorhergehenden Ansprüche,
**dadurch gekennzeichnet,**
**daß** die Steuereinrichtung (2, 4) die Datenübertragungsstrecke (9) und der anzusteuernde Verbraucher (5) in einer Gehäuseeinheit untergebracht sind.

6. Datenaustauschsystem nach einem der Ansprüche 1 bis 5,
**dadurch gekennzeichnet,**
**daß** die Datenübertragungsstrecke (9) in Form einer Busleitung ausgestaltet ist, über die mehrere Verbraucher (5) mit Hilfe des Mobilteils (1) und der Steuereinrichtung (2, 4) ansteuerbar sind.

7. Datenaustauschsystem nach einem der vorhergehenden Ansprüche,
**dadurch gekennzeichnet,**
**daß** die Steuereinrichtung (2, 4) derart ausgestaltet ist, daß über die Steuereinrichtung (2, 4) mit Hilfe des Mobilteils (1) eine Zustandsabfrage der an die Datenübertragungsstrecke (9) angeschlossenen Verbraucher (5) möglich ist.

8. Datenaustauschsystem nach einem der vorhergehenden Ansprüche,
**dadurch gekennzeichnet,**
**daß** die an die Datenübertragungsstrecke (9) angeschlossenen Verbraucher (5) über eine hierarchische Menüstruktur, welche bei Ansteuerung der Steuereinrichtung (2, 4) durch das Mobilteil (1) auf einer Anzeigeneinheit (8) des Mobilteils (1) darstellbar ist, von dem Mobilteil (1) ansteuerbar sind.

9. Datenaustauschsystem nach einem der vorhergehenden Ansprüche,
**dadurch gekennzeichnet,**
**daß** das Mobilteil (1) und die Steuereinrichtung (2, 4) derart ausgestaltet sind, daß die Übertragung der Steuerbefehle über die Internet-Schnittstelle des Mobilteils gemäß dem WAP-Protokoll erfolgt.

## Claims

1. Data exchange system:
with a mobile component (1), and
with a control device (2, 4), which is designed in such a way that it receives control commands from the mobile component (1) to control at least one consumer (5), converts the said control commands into corresponding control signals and transmits the said control signals via a data transmission path (9) to the consumer (5) which is to be controlled,
**characterized in that**
the mobile component (1) has an Internet interface to transmit control commands to the control device (2, 4), the control device (2, 4) is designed in such a way that it can evaluate control commands transmitted by the mobile component (1) via the Internet interface and can convert said control commands into a corresponding control of the consumers (5) connected to the data transmission path (9), and
**in that** the mobile component (1) has identification means (10) to identify the user of the mobile component (1), and the mobile component (1) and/or the control device (2, 4) are designed in such a way that the identification information supplied by the identification means (10) is evaluated in order to release access to the consumers (5) connected to the data transmission path (9) and/or individual functions of said consumers.

2. Data exchange system according to Claim 1,
**characterized in that**
the mobile component (1) is a mobile telephone.

3. Data exchange system according to Claim 1 or 2,
**characterized in that** the control device comprises an interface device (2) as a communications interface between the mobile component (1) and a communications network (3).

4. Data exchange system according to Claim 3,
**characterized in that**
the control device (2, 4) is controlled by the mobile component (1) in a different frequency range from that used for the transmission of communications information between the mobile component (1) and the interface device (2).

5. Data exchange system according to one of the preceding claims,
**characterized in that**
the control device (2, 4), the data transmission path (9) and the consumers (5) which are to be controlled are accommodated in one housing unit.

6. Data exchange system according to one of Claims 1 to 5,
**characterized in that**
the data transmission path (9) is designed in the form of a bus line, via which a plurality of consumers (5) can be controlled with the aid of the mobile component (1) and the control device (2, 4).

7. Data exchange system according to one of the preceding claims,
**characterized in that**
the control device (2, 4) is designed in such a way that a status query relating to the consumers (5) connected to the data transmission path (9) can be made via the control device (2, 4) with the aid of the mobile component (1).

8. Data exchange system according to one of the preceding claims,
**characterized in that** the consumers (5) connected to the data transmission path (9) can be controlled via a hierarchical menu structure which can be presented on a display unit (8) of the mobile component (1) when the control device (2, 4) is controlled by the mobile component (1).

9. Data exchange system according to one of the preceding claims,
**characterized in that**
the mobile component (1) and the control device (2, 4) are designed in such a way that the control commands are transmitted via the Internet interface of the mobile component in accordance with the WAP protocol.

## Revendications

1. Système d'échange de données,
comprenant une partie mobile (1), et
un dispositif de commande (2, 4) qui est conçu de telle sorte qu'il reçoit de la partie mobile (1) des instructions de commande pour la commande d'au moins un consommateur (5), transforme en signaux de commande appropriés et transmet ces signaux au moyen d'un tronçon de transmission de données (9) au consommateur (5) à commander,
**caractérisé en ce que**
la partie mobile (1) présente une interface Internet pour la transmission des instructions de commande au dispositif de commande (2, 4),
**en ce que** le dispositif de commande (2, 4) est conçu de telle sorte qu'il peut analyser des instructions de commande, transmises par la partie mobile (1) au moyen de l'interface Internet, et peut les transformer en une commande appropriée des consommateurs (5) raccordés au tronçon de transmission de données (9) et **en ce que** la partie mobile (1) présente des moyens d'identification (10) pour l'identification de l'utilisateur de la partie mobile (1), et **en ce que** la partie mobile (1) et/ou le dispositif de commande (2, 4) sont conçus de telle sorte que les informations d'identification fournies par les moyens d'identification (10) sont analysées pour la libération d'un accès aux consommateurs (5) raccordés au tronçon de transmission de données (9) et/ou de fonctions individuelles de ceux-ci.

2. Système d'échange de données selon la revendication 1,
**caractérisé en ce que**
la partie mobile (1) est un téléphone mobile.

3. Système d'échange de données selon la revendication 1 ou 2,
**caractérisé en ce que**
le dispositif de commande comprend un dispositif interface (2) comme interface de communication entre la partie mobile (1) et un réseau de communication (3).

4. Système d'échange de données selon la revendication 3,
**caractérisé en ce que**
la commande du dispositif de commande (2, 4) s'effectue par la partie mobile (1) dans une autre plage de fréquences que pour la transmission d'informations de communication entre la partie mobile (1) et le dispositif interface (2).

5. Système d'échange de données selon l'une quelconque des revendications précédentes,
**caractérisé en ce que**
le dispositif de commande (2, 4), le tronçon de transmission de données (9) et le consommateur (5) à commander sont logés dans une unité de boîtier.

6. Système d'échange de données selon l'une quelconque des revendications 1 à 5,
**caractérisé en ce que**
le tronçon de transmission de données (9) est conçu sous la forme d'une ligne de bus par laquelle plusieurs consommateurs (5) peuvent être commandés à l'aide de la partie mobile (1) et de l'appareil de commande (2, 4).

7. Système d'échange de données selon l'une quelconque des revendications précédentes,
**caractérisé en ce que**
le dispositif de commande (2, 4) est conçu de telle sorte qu'une interrogation d'état concernant les consommateurs (5) raccordés au tronçon de transmission de données (9) est possible au moyen du dispositif de commande (2, 4) à l'aide de la partie mobile (1).

8. Système d'échange de données selon l'une quelconque des revendications précédentes,
**caractérisé en ce que**
les consommateurs (5) raccordés au tronçon de transmission de données (9) peuvent être commandés par la partie mobile (1) au moyen d'une structure de menu hiérarchique, qui peut être représentée en cas de commande du dispositif de commande (2, 4) par la partie mobile (1) sur une unité d'affichage (8) de la partie mobile (1).

9. Système d'échange de données selon l'une quelconque des revendications précédentes,
**caractérisé en ce que**
la partie mobile (1) et le dispositif de commande (2, 4) sont conçus de telle sorte que la transmission des instructions de commande s'effectue au moyen de l'interface Internet de la partie mobile selon le protocole WAP.
